# EUROPÄISCHE PATENTANMELDUNG

(11) **EP 1 798 020 A2**
(43) Veröffentlichungstag der Anmeldung: **20.06.2007**
(21) Anmeldenummer: 06024887.9
(22) Anmeldetag: 01.12.2006
(51) Int. Cl.: B29C 65/24, B29C 65/26, B29C 65/18

(54) **Spleisseinrichtung**

(30) Priorität: 14.12.2005 DE 102005060200
(71) Anmelder: Karl Eugen Fischer GmbH Maschinenfabrik, 96224 Burgkunstadt (DE)
(72) Erfinder: Klenner, Ralf, 96272 Hochstadt (DE); Lauer, Stefan, 96247 Michelau-Schwürbitz (DE)
(74) Vertreter: Blaumeier, Jörg

(57) **Zusammenfassung**

Spleißeinrichtung zum Spleißen von un- oder vorvulkanisierten Bandabschnitten aus einem Gummimaterial, insbesondere von Textil- oder Stahlcordbändern, umfassend ein an den zu verspleißenden Bandabschnitten angreifendes Spleißwerkzeug, wobei wenigstens eine Heizeinrichtung (9, 10, 9a -9d, 10a - 10d, 20, 21, 31, 32, 40, 41, 46, 52, 53) zum Erwärmen zumindest eines Teils des Spleißwerkzeugs (2, 15, 23, 26, 34, 36, 43, 45, 48, 50) vorgesehen ist.

## Beschreibung

Die Erfindung betrifft eine Spleißeinrichtung zum Spleißen von un- oder vorvulkanisierten Bandabschnitten aus einem Gummimaterial, insbesondere von Textil- oder Stahlcordbändern, umfassend ein an den zu verspleißenden Bandabschnitten angreifendes Spleißwerkzeug.

Spleißeinrichtung der in Rede stehenden Art kommen vornehmlich in der Reifenindustrie zum Einsatz und dienen dazu, Endlosbänder aus geschnittenen Bandabschnitten, insbesondere in Form von Textil- oder Stahlcordbandabschnitten, herzustellen. Die Bandabschnitte bestehen aus einem un- oder vorvulkanisierten Gummimaterial, das die Trägermatrix bildet. In dieses Gummimaterial sind häufig Textil- oder Stahlcordeinlagen integriert. Die zuvor geschnittenen Bandabschnitte werden mittels der Spleißeinrichtung bzw. des einrichtungsseitig vorgesehenen Spleißwerkszeugs entweder überlappend oder stumpf gespleißt, also miteinander fest verbunden, was infolge der Klebrigkeit des Gummimaterials möglich ist. Als Spleißwerkzeuge sind unterschiedliche Werkzeuge, bestehend aus einem Ober- und einem Unterwerkzeug bekannt. Ein Spleißwerkzeug kann beispielsweise eine obere Spleißleiste und einen Spleißtisch umfassen, wobei die Spleißleiste relativ zum Spleißtisch, auf dem die beiden einander überlappenden Bandabschnitte liegen, und der das Unterwerkzeug bildet, bewegbar ist. Bekannt sind ferner Spleißwerkzeuge, die als Oberwerkzeug ein Kegelradpaar, das aus einer Ruheposition heraus horizontal über die gegengelagerten Bandabschnitte, die dann stumpf gespleißt werden, gezogen wird, umfassen. Die Gegenlagerung erfolgt entweder über ein weiteres synchron bewegbares Kegelradpaar als Unterwerkzeug, über eine gegenlagernde, synchron bewegte Gegendruckwalze oder aber einfach über einen gegenlagernden Spleißtisch, der das Unterwerkzeug bildet. Schließlich sind auch Spleißwerkzeuge bekannt, bei denen das Oberwerkzeug und das Unterwerkzeug jeweils aus einem Paar von Zahnleisten gebildet wird. Hier ist das Oberwerkzeug, also die beiden oberen Zahnleisten, vertikal in Anlage an die stumpf zu spleißenden Bandabschnitte bewegbar, die auf den unteren Spleißleisten aufgelagert sind. Zum endgültigen Verspleißen fahren dann alle Spleißleisten unter Eingriff der zueinander gerichteten Spleißleistenzähne ineinander.

In jedem Fall ist es zur Erhöhung der Klebrigkeit und somit auch zur Steigerung der Spleißfestigkeit bei vielen Gummimaterialien von Vorteil, die Temperatur der Materialien zu erhöhen, diese also gegenüber der Umgebungstemperatur etwas zu erwärmen.

Bisher wird das Material im Bereich der miteinander zu verspleißenden Kanten selbst erwärmt, wobei die Erwärmung an einer Position vor der Spleißeinrichtung erfolgt, üblicherweise bereits auf dem Tisch einer der Spleißeinrichtung vorgeschalteten Schneid- oder Schereneinrichtung. Die in der Schneid- oder Schereneinrichtung geschnittenen Bandabschnitte werden bekanntlich von dort in die Spleißeinrichtung zum Verbinden gefördert. Wenn das Material an einer Stelle vor der Spleißeinrichtung, also beispielsweise eben am Schneideinrichtungstisch, erwärmt wird, kühlt es auf dem Weg in die Spleißeinrichtung wieder etwas ab. Um diese Abkühlung zu kompensieren, muss das Gummimaterial auf eine etwas höhere Temperatur gebracht werden, als sie für einen vorteilhaften Spleißvorgang eigentlich benötigt wird. Dies ist mit einem erhöhten Energieverbrauch und mit einer übermäßigen Materialerwärmung verbunden. Des Weiteren führen kurzzeitliche Stillstände an der Maschine, z. B. bei Umstellung der Schneidbreite oder bei Spulenwechsel etc. dazu, dass eine erwärmte Kante stärker abkühlt, als im normalen durchlaufenden Automatikbetrieb, da der Spleißzyklus unterbrochen ist. Der Effekt der Kantenerwärmung und somit die daraus resultierende Erhöhung der Spleißfestigkeit kann in solchen Fällen häufig überhaupt nicht vorteilhaft genutzt werden, da die Kante mitunter zu stark abgekühlt hat, gegebenenfalls sogar wieder auf Umgebungstemperatur.

Der Erfindung liegt damit das Problem zugrunde, eine Spleißeinrichtung anzugeben, die ein verbessertes Spleißen der Bandabschnitte ermöglicht.

Zur Lösung dieses Problems ist bei einer Spleißeinrichtung der eingangs genannten Art erfindungsgemäß wenigstens eine Heizeinrichtung zum Erwärmen zumindest eines Teils des Spleißwerkzeugs vorgesehen.

Anders als bei bisher bekannten Einrichtungen erfolgt bei der erfindungsgemäßen Spleißeinrichtung die Erwärmung des Spleißwerkzeugs selbst. Vom Spleißwerkzeug wird unmittelbar mit Beginn des Spleißvorgangs, wenn also das Spleißwerkzeug an den Bandabschnitten angreift, Wärmeenergie in die Bandabschnitte eingetragen, so dass diese erwärmt werden. Die Erwärmung des Bandmaterials erfolgt also genau zu dem Zeitpunkt, zu dem der Spleißvorgang erfolgt, wenn also die erhöhte Klebrigkeit bzw. die erhöhte Materialtemperatur auch tatsächlich benötigt wird. Des Weiteren erfolgt die Erwärmung auch genau in dem Bereich, wo eben die Spleißverbindung erzeugt werden soll.

Die eingangs genannten Probleme sind damit vorteilhaft bei der erfindungsgemäßen Spleißeinrichtung nicht gegeben. Denn die Gefahr, dass das bereits erwärmte Bandmaterial wieder abkühlt, ist hier nicht gegeben, nachdem das Bandmaterial selbst vor dem Spleißvorgang überhaupt nicht erwärmt wird. Auch ist eine übermäßige Erwärmung des Bandmaterials zur Kompensation etwaiger Temperaturverluste während des Transportvorgangs etc. ebenfalls nicht erforderlich, nachdem bei der erfindungsgemäßen Spleißeinrichtung genau am Spleißort zu genau dem Zeitpunkt erwärmt wird, wo die erhöhte Materialtemperatur benötigt wird.

Das Spleißwerkzeug selbst besteht wie eingangs beschrieben in der Regel aus einem Oberwerkzeug und einem Unterwerkzeug, zwischen denen die Bandabschnitte verspleißt werden. Die Heizeinrichtung selbst kann dabei entweder dem Oberwerkzeug oder dem Unterwerkzeug zugeordnet sein. Denn infolge der Erwärmung des Werkzeugs selbst erfolgt ein unmittelbarer Wärmeübergang in das Material im Zeitpunkt des Spleißvorgangs, weshalb vor allem bei dünneren Bandabschnitten eine Erwärmung nur des Ober- oder des Unterwerkszeugs ausreichend ist, da eine sehr schnelle Durchwärmung des Bandes möglich ist. Zweckmäßigerweise ist es selbstverständlich auch möglich, sowohl dem Oberwerkzeug als auch dem Unterwerkzeug jeweils eine Heizeinrichtung zuzuordnen, mithin also beide zu erwärmen, so dass sich im Spleißfall ein Temperatureintrag von beiden Seiten in das Bandmaterial ergibt.

Hinsichtlich der Art der Erwärmung des Spleißwerkzeugs, insbesondere des Ober- und/oder Unterwerkzeugs, sind unterschiedliche Erwärmungsarten denkbar. Zum einen kann die Heizeinrichtung das Werkzeug direkt erwärmen, ist also im oder am Werkzeug bzw. dem Ober- oder Unterwerkzeug angeordnet. Hierfür wird besonders bevorzugt eine Heizeinrichtung in Form eines elektrischen Widerstandsheizers verwendet. Alternativ dazu ist es auch möglich, das Spleißwerkzeug bzw. das Ober- bzw. das Unterwerkzeug indirekt zu erwärmen, wozu bevorzugt entweder eine Heizeinrichtung in Form eines Strahlungsheizers oder eines Heizgebläses eingesetzt wird. In diesem Fall wäre der Strahlungsheizer (bei dem es sich natürlich auch letztlich um einen Widerstandsheizer handeln kann) oder das Heizgebläse möglichst eng benachbart zu dem zu erwärmenden Werkzeug oder Werkzeugteil angeordnet, um dieses indirekt zu erwärmen.

Ein elektrischer Widerstandsheizer kann beispielsweise als am, im oder benachbart zum Spleißwerkzeug, insbesondere dem Ober- und/oder Unterwerkzeug angeordnetes Heizband, als Heizpatrone oder als Flächenheizer ausgebildet sein. Denkbar ist jeder geeignete Widerstandsheizer, der eine ausreichende Erwärmung des Werkzeugs oder des Werkzeugteils im erforderlichen Bereich ermöglicht. Dabei ist es natürlich denkbar, beispielsweise im Falle der Integration von Heizbändern in eine Spleißleiste oder einen Spleißtisch mehrere separate derartige Heizbänder oder dergleichen nebeneinander anzuordnen, so dass durch selektiven Betrieb der separaten Heizbänder die Spleißeinheit über eine variable Länge erwärmt werden kann. Das heißt, im Falle des Spleißens relativ schmaler Bandabschnitte könnten beispielsweise nur zwei Heizbänder betrieben werden, beispielsweise zwei in der Mitte der Spleißleistenlänge angeordnete Heizbänder. Werden demgegenüber breite Bänder verspleißt, können auch zusätzlich noch zwei benachbarte Heizbänder angesteuert werden, so dass die Spleißleiste über ihre gesamte Länge erwärmt wird. Auf diese Weise könnte durch selektives Ansteuern der einzelnen kaskadiert angeordneten Heizbänder oder Heizpatronen ein bezogen auf die Bandbreite abgestimmter Heizbetrieb realisiert werden. Dies gilt natürlich auch bezogen auf andere Heizeinrichtungen wie Strahlungsheizer und Heizgebläse. Denn es wäre genauso möglich, bezogen auf die Breite des Spleißwerkzeugs (die Breite des Spleißwerkzeugs wird parallel zur Breite des Bandes verstanden) mehrere Heizgebläse oder Strahlungsheizer nebeneinander anzuordnen, die selektiv angesteuert werden können. Insgesamt ist es also zweckmäßig, wenn bezogen auf die Breite des Spleißwerkzeugs, insbesondere des Ober- und/oder Unterwerkzeugs, mehrere separat angesteuerte Heizeinrichtungen neben- oder hintereinander angeordnet sind.

Wird eine Heizeinrichtung, z. B. in Form eines Heizbandes oder einer Heizpatrone, also eines elektrischen Widerstandsheizers, direkt in das Spleißwerkzeug, also beispielsweise in die Spleißleiste, integriert, so wird die eine oder werden die mehreren integrierten Heizeinrichtungen im Falle der Spleißleiste vertikal bewegt. Kommen Heizeinrichtungen in der Form von Strahlungsheizern und Heizgebläsen zum Einsatz, so ist es zweckmäßig, diese stationär anzuordnen und derart zu positionieren, dass ein relativ zu den Bandabschnitten zwischen einer Ruhe- und einer Spleißstellung bewegbarer Teil des Spleißwerkzeugs, insbesondere das Ober- und Unterwerkzeug, hier also beispielsweise die Spleißleiste, in der vom Bandabschnitt entfernten Ruhestellung erwärmbar ist. Die indirekten Heizer sind also so positioniert, dass beispielsweise die Spleißleiste dann in ihrem unteren, am Bandabschnitt angreifenden Bereich erwärmt wird, wenn sie in der oberen Ruheposition ist, in die sie geführt wird, wenn ein Spleißvorgang beendet ist. Diese Art der Erwärmung eines Werkzeugteils nur in der Ruheposition ist natürlich auch insbesondere bei Verwendung von Kegelradwerkzeugen zweckmäßig, da sich die Kegelräder während der Bewegung quer zur Bandabschnittslänge drehen und infolgedessen eine Erwärmung durch Integration der Heizeinrichtungen nicht unbedingt zweckmäßig wäre. Nachdem es sich bei den Werkzeugen bzw. Werkzeugteilen um Metallteile handelt, die ein sehr gutes Wärmeleitvermögen und ein gutes Temperaturhaltevermögen besitzen, ist es ausreichend, wenn die Werkzeuge oder Werkzeugteile eben nur in der Ruhestellung erwärmt werden, wenn sie einmal auf Temperatur gebracht sind.

Die Heizleistung einer Heizeinrichtung oder jeder separaten ansteuerbaren Heizeinrichtung ist zweckmäßigerweise variierbar, um sich beispielsweise unterschiedlichen Banddicken anpassen zu können. Bei relativ dünnen Bandabschnitten ist mitunter eine etwas geringere Erwärmung ausreichend, während bei dickeren Bandabschnitten eine gegebenenfalls stärkere Erwärmung vonnöten ist, um das dickere Band möglichst schnell zu durchwärmen.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung einer erfindungsgemäßen Spleißeinrichtung einer ersten Ausführungsform,
- Fig. 2: eine Seitenansicht der Spleißeinrichtung aus Fig. 1,
- Fig. 3: eine Prinzipdarstellung einer erfindungsgemäßen Spleißeinrichtung einer zweiten Ausführungsform,
- Fig. 4: eine Prinzipdarstellung einer erfindungsgemäßen Spleißeinrichtung einer dritten Ausführungsform,
- Fig. 5: eine Aufsicht auf die Spleißeinrichtung aus Fig. 4,
- Fig. 6: eine Darstellung einer erfindungsgemäßen Spleißeinrichtung einer vierten Ausführungsform,
- Fig. 7: eine Seitenansicht der Spleißeinrichtung aus Fig. 6,
- Fig. 8: eine Prinzipdarstellung einer erfindungsgemäßen Spleißeinrichtung einer fünften Ausführungsform, und
- Fig. 9: eine Prinzipdarstellung einer erfindungsgemäßen Spleißeinrichtung einer sechsten Ausführungsform.

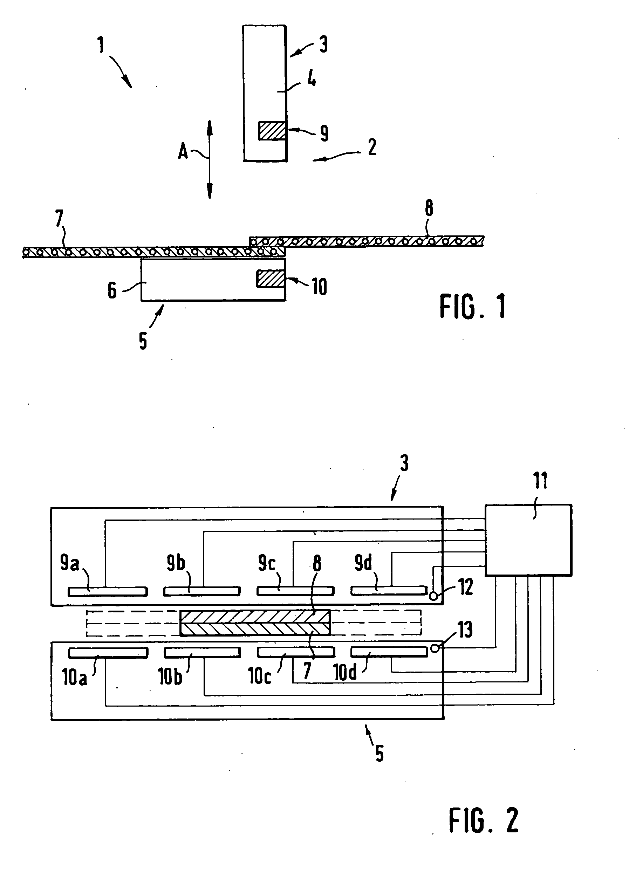

Fig. 1 zeigt eine erfindungsgemäße Spleißeinrichtung 1 in Form einer Prinzipdarstellung, wobei hier nur die zentralen, zur Erläuterung der Erfindung benötigten Komponenten dargestellt sind. Gezeigt ist das Spleißwerkzeug 2, bestehend aus einem Oberwerkzeug 3 in Form einer vertikal bewegbaren Spleißleiste 4 (siehe Doppelpfeil A), sowie aus einem lagefesten Unterwerkzeug 5 in Form eines Spleißtisches 6. Der Spleißtisch 6 lagert zwei zu verspleißende Bandabschnitte 7, 8 auf, die in ihrem Kantenbereich wie in Fig. 1 gezeigt überlappen. Der Bandabschnitt 7 wurde im vorher durchgeführten Spleißvorgang an ein Endlosband angespleißt, bildet also das Ende dieses Bandes. Der Bandabschnitt 8 wurde durch eine nicht näher gezeigte Zuführeinrichtung von einer nicht näher gezeigten Schneideinrichtung kommend herangefördert und mit seiner vorlaufenden Kante der hinteren Kante des Bandabschnitts 7 überlagert. Zum Verspleißen fährt nun die Spleißleiste 4 nach unten und drückt beide überlappten Bandkanten aufeinander, gegengelagert durch den Spleißtisch 6.

Erfindungsgemäß sind bei der gezeigten Ausgestaltung zwei dem Spleißwerkzeug 2 zugeordnete Heizeinrichtungen 9, 10 vorgesehen, die im gezeigten Ausführungsbeispiel jeweils im Oberwerkzeug 3 und im Unterwerkzeug 5, hier also der Spleißleiste 4 und dem Spleißtisch 6, integriert sind. Wie Fig. 2 zu entnehmen ist, sind in der Spleißleiste 4 jeweils mehrere Heizeinrichtungen 9a, 9b, 9c und 9d nebeneinander, also parallel zu den verspleißenden Bandkanten bzw. der Leistenbreite verlaufend, sowie mehrere Heizeinrichtungen 10a, 10b, 10c und 10d im Spleißtisch 6 angeordnet. Sämtliche Heizeinrichtungen 9a - d sowie 10a - d können über eine gemeinsame Steuerungseinrichtung 11 separat angesteuert werden, das heißt, der Betrieb der einzelnen Heizeinrichtungen kann individuell über die Steuerungseinrichtung 11, die vorzugsweise den Betrieb der gesamten Spleißeinrichtung steuert, angesteuert werden.

Die Heizeinrichtungen, bei denen es sich im gezeigten Beispiel um elektrische Widerstandsheizer handelt, z. B. in Form von Heizbändern oder Heizpatronen, dienen nun zum Erwärmen des Oberwerkzeugs 3 bzw. des Unterwerkzeugs 5, und zwar genau in dem Bereich, in dem die Spleißverbindung erzeugt werden soll. Das heißt, das Werkzeug selbst wird hier temperiert, also über die Heizeinrichtungen auf eine gegenüber der Umgebungstemperatur erhöhte Temperatur gebracht. Wird nun gespleißt, so senkt sich wie ausgeführt das Oberwerkzeug 3 auf das Unterwerkzeug 5. Nachdem beide erwärmt sind und während des Spleißvorgangs am Bandmaterial anliegen, erwärmt sich zwangsläufig durch den Wärmeübergang von dem Oberwerkzeug 3 bzw. dem Unterwerkzeug 5 zum Bandmaterial auch dieses, und zwar unmittelbar in dem Bereich, in dem die Spleißverbindung erzeugt werden soll. Nach Beendigung des Spleißvorgangs fährt die Spleißleiste 4 wieder nach oben, das gespleißte Band wird abgezogen, ein neuer Bandabschnitt wird herangefördert und dem hinteren Ende des angespleißten Bandabschnitts 8 überlagert, so dass ein weiterer Spleißvorgang beginnen kann.

Die Heizeinrichtungen können dabei während der gesamten Dauer betrieben werden, oder aber intermittierend, das heißt, sie werden zyklisch an- und abgeschalten, was den Energieverbrauch gegebenenfalls vermindert. Zweckmäßigerweise können hierfür im Oberwerkzeug 3 und im Unterwerkzeug 5 Temperatursensoren 12, 13 vorgesehen sein, die mit der Steuerungseinrichtung 11 kommunizieren. Über die Breite des Oberwerkzeugs 3 bzw. Unterwerkzeugs 5 können natürlich auch mehrere separate Temperatursensoren verteilt angeordnet sein. Dies lässt es zu, die Ist-Temperatur bzw. den Ist-Temperaturverlauf über das jeweilige Werkzeugteil über die Steuerungseinrichtung 11 zu erfassen, um dann gegebenenfalls den Heizeinrichtungsbetrieb entsprechend zu steuern. Sinkt beispielsweise die Temperatur des jeweiligen Werkzeugs unter eine bestimmte Soll-Temperatur, können die Heizeinrichtungen zugeschaltet werden, bis die Ist-Temperatur wieder der Soll-Temperatur entspricht oder größer ist, wonach sie wieder ausgeschaltet werden. Es kann also eine echte Temperaturregelung unter kontinuierlicher Erfassung der Ist-Temperatur erfolgen. Dies lässt es auch zu, durch entsprechende Wahl der Soll-Temperatur für den jeweiligen Spleißbetrieb unterschiedliche Temperaturen am Werkzeug selbst einzuregeln. Bei dünneren Bandabschnitten sind mitunter niedrigere Temperaturen an den einzelnen Werkzeugen ausreichend, während bei dicken Bandabschnitten die einzelnen Werkzeuge stärker erwärmt werden sollten.

Einen weiteren Vorteil der Anordnung mehrerer Heizeinrichtungen 9a - d bzw. 10a - d ergibt sich aus Fig. 2. In Fig. 2 sind die beiden einander überlappenden Bandabschnitte 7, 8 ausgezogen dargestellt. Ersichtlich ist es zum Verspleißen dieser beiden, eine relativ geringe Breite aufweisenden Bandabschnitte ausreichend, wenn lediglich die Heizeinrichtungen 9b und 9c sowie 10b und 10c betrieben werden und die Spleißleiste 4 und der Spleißtisch 6 nur lokal erwärmt werden. Die anderen Heizeinrichtungen 9a, 9d bzw. 10a, 10d müssen hier nicht angesteuert werden, was den Energieverbrauch reduziert. Selbstverständlich wäre es in diesem Fall zweckmäßig, wenn jeweils mehrere Temperatursensoren 12, 13 über die Breite der jeweiligen Werkzeuge verteilt angeordnet sind, um beispielsweise nur im Bereich der in diesem Fall angesteuerten Heizeinrichtungen die Ist-Temperatur zu erfassen.

Gestrichelt dargestellt ist ferner die Situation, wenn breite Bandabschnitte 7, 8 verspleißt werden sollen. Ersichtlich erstrecken sich die breiten Bandabschnitte 7, 8, wie durch die strichelierte Darstellung angedeutet ist, bis in den Bereich der seitlichen Heizeinrichtung 9a, 9d bzw. 10a, 10d. In diesem Fall würden alle acht Heizeinrichtungen angesteuert werden. An dieser Stelle ist darauf hinzuweisen, dass die dargestellten vier Heizeinrichtungen lediglich exemplarischer Natur sind. Selbstverständlich ist es auch denkbar, nur drei oder mehr als vier Heizeinrichtungen pro Werkzeugteil vorzusehen.

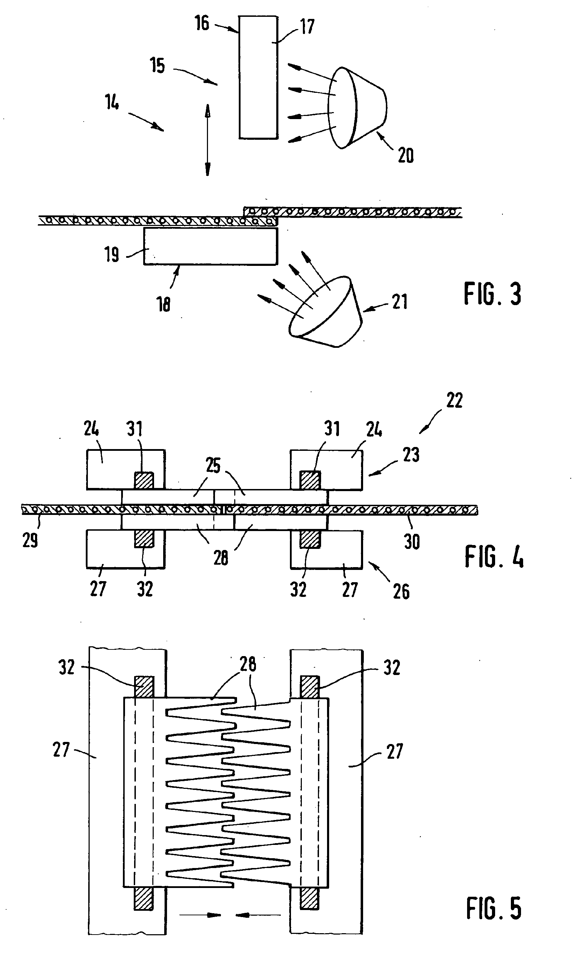

Fig. 3 zeigt eine weitere erfindungsgemäße Spleißeinrichtung 14, umfassend ein Spleißwerkzeug 15 mit einem Oberwerkzeug 16 in Form einer Spleißleiste 17, sowie ein Unterwerkzeug 18 in Form eines Spleißtisches 19. Als Heizeinrichtungen 20, 21 sind hier Heizstrahler oder Heizgebläse vorgesehen, die ersichtlich etwas beabstandet zu der Spleißleiste 17 bzw. dem Spleißtisch 19 angeordnet sind. Hier erfolgt also eine indirekte Erwärmung der Werkzeugteile, anders als bei der Ausgestaltung nach den Figuren 1 und 2, wo eine direkte Erwärmung infolge der Integration der Heizeinrichtungen im jeweiligen Werkzeugteil erfolgt. Auch hier können nebeneinander mehrere Heizeinrichtungen 20, 21 vorgesehen sein, um - ähnlich wie bei der Ausgestaltung nach Fig. 1 und 2 - durch separate Ansteuerung der einzelnen nebeneinander liegenden Heizeinrichtungen 20, 21 selektiv bestimmte Abschnitte am jeweiligen Werkzeug zu erwärmen. Auch hier ist selbstverständlich eine - wenngleich hier nicht näher gezeigte - entsprechende Steuerungseinrichtung vorgesehen, über die die einzelnen oder mehreren Heizeinrichtungen 20, 21 entsprechend angesteuert werden können, entsprechend der Ausgestaltung nach Figuren 1 und 2. Temperatursensoren werden in diesem Fall ebenfalls bevorzugt direkt in dem Oberwerkzeug 16 bzw. dem Unterwerkzeug 18 integriert, um die Ist-Temperatur am Spleißbereich direkt erfassen zu können und gegebenenfalls in den Steuerungsbetrieb der jeweiligen Heizeinrichtung einfließen zu lassen. Die der Spleißleiste 17 zugeordnete Heizeinrichtung oder die mehreren Heizeinrichtungen 20 sind so angeordnet, dass der Wärmeenergieeintrag in die Spleißleiste primär dann erfolgt, wenn diese in der in Fig. 3 gezeigten oberen Ruhestellung ist.

An dieser Stelle ist darauf hinzuweisen, dass - Entsprechendes gilt bezüglich der Ausführungsform nach den Figuren 1 und 2 - auch nur in einem der Werkzeuge eine oder mehrere Heizeinrichtungen angeordnet bzw. zugeordnet sein können.

Die Figuren 4 und 5 zeigen eine weitere erfindungsgemäße Ausführungsform einer Spleißeinrichtung 22, umfassend ein Oberwerkzeug 23 bestehend aus zwei oberen Spleißleisten 24 mit daran angeordneten Zahnleisten 25, sowie einem Unterwerkzeug 26, bestehend aus zwei Spleißleisten 27 mit daran angeordneten Zahnleisten 28. Die Zahnleisten 25 und 28 - siehe die Aufsicht auf die unteren Spleißleisten 27 gemäß Fig. 5 - greifen ineinander, wenn die Spleißleisten 24 bzw. 27 ineinander gefahren werden, nachdem die Spleißleisten 24 aus der angehobenen Ruhestellung in die an den Bandabschnitten 29, 30 angreifende Spleißstellung bewegt werden, aus der sie dann horizontal ineinander geschoben werden.

Ersichtlich sind auch hier in den Spleißleisten 24 entsprechende Heizeinrichtungen 31 bzw. in den Spleißleisten 27 bzw. Heizeinrichtungen 32 integriert. Auch hier kann es sich beispielsweise um entsprechende elektrische Widerstandsheizeinrichtungen in Form von Heizbändern oder Heizpatronen handeln. Diese sind so angeordnet, dass sie thermisch mit den Zahnleisten 25 bzw. 28 gekoppelt sind, so dass diese erwärmt werden können. Wie Fig. 4 zeigt, greifen hier die Zahnleisten 25 bzw. 28 an den Bandabschnitten 29, 30 zum stumpfen Verspleißen derselben an. Über die Zahnleisten 25, 28 erfolgt dann der Wärmeeintrag zum Erhöhen der Klebrigkeit der Bandabschnitte in das Bandmaterial. Nachdem es sich bei den Zahnleisten 25, 28 - Entsprechendes gilt für alle verwendeten Spleißwerkzeuge - um Metallbauteile handelt, die eine hohe Wärmeleitfähigkeit haben, ist trotz Anordnung der Heizeinrichtungen 31, 32 im Bereich der Leistenfüße eine vollständige und homogene Durchwärmung der Spleißleisten 25, 28 gewährleistet.

Anders als in Fig. 5, wo lediglich jeweils eine Heizeinrichtung 31 bzw. 32 pro Spleißleiste 25, 28 dargestellt ist, könnten auch hier mehrere nebeneinander angeordneten Heizeinrichtungen 31, 32, die separat über eine nicht näher gezeigte, jedoch auch hier natürlich vorhandene Steuerungseinrichtung, angesteuert werden, vorgesehen sein. Auch können natürlich entsprechende Temperatursensoren wie bezüglich der Ausgestaltung nach Figuren 1 und 2 an den jeweiligen Zahnleisten oder benachbart dazu zur Erfassung der Ist-Temperatur für eine Regelung des Heizbetriebs vorgesehen sein. Wie auch bei den anderen Ausgestaltungen ist es auch hier nicht erforderlich, sowohl im Ober- bzw. dem Unterwerkzeug 23, 26 entsprechende Heizeinrichtungen vorzusehen, gegebenenfalls ist es ausreichend, nur in einem Werkzeugteil entsprechende Heizeinrichtungen anzuordnen. Anstelle der integrierten Heizeinrichtungen 31, 32 wäre es auch hier natürlich denkbar, indirekt erwärmende Heizeinrichtungen in Form der Heizstrahler oder Heizgebläse vorzusehen, wie bezüglich der Ausführungsform in Fig. 3 beschrieben.

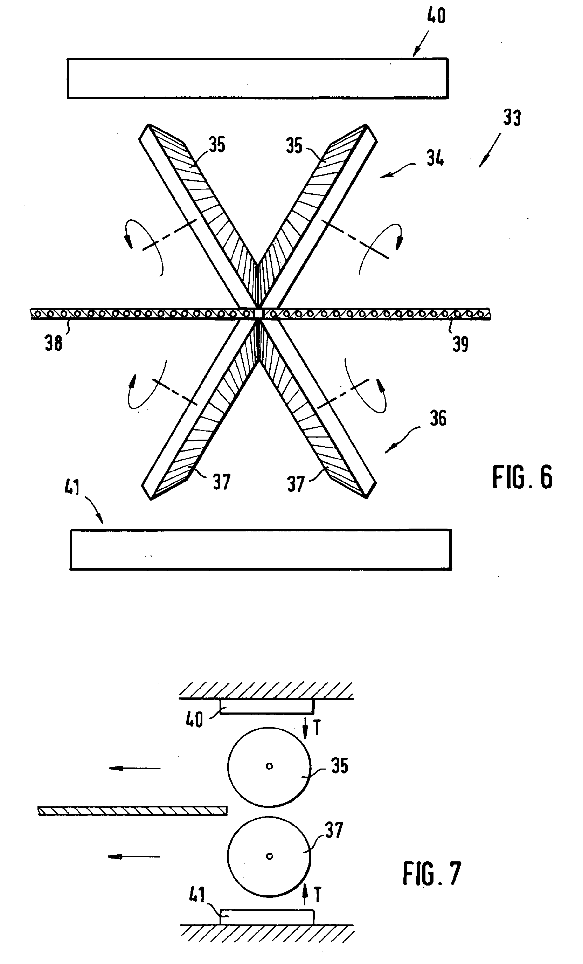

Die Figuren 6 und 7 zeige eine weitere erfindungsgemäße Spleißeinrichtung 33, bestehend aus einem Oberwerkzeug 34 in Form zweier gekippt zueinander stehender Kegelräder 35, sowie aus einem Unterwerkzeug 36, ebenfalls bestehend aus zwei gekippt zueinander stehenden Kegelrädern 37. Die Kegelräder 37 werden bei der gezeigten Kegelrad-Spleißeinrichtung 33 auf die beiden stumpf zu spleißenden Bandabschnitte 38, 39 gedrückt. Im angedrückten Zustand werden die Kegelräder 35, 37 über das Bandmaterial gezogen, wobei die Kegelräder 35, 37 sich dabei wie durch die Pfeile dargestellt um ihre jeweiligen Drehachsen drehen. Sie können lose laufen oder angetrieben sein. Bei dem Ziehen über das Bandmaterial wird dieses verdichtet und somit verspleißt. Die Funktionsweise dieser Kegelrad-Spleißeinrichtungen ist hinlänglich bekannt.

Auch hier sind dem Oberwerkzeug 34 und dem Unterwerkzeug 36 jeweilige Heizeinrichtungen 40, 41 zugeordnet, die über eine gemeinsame Steuerungseinrichtung entsprechend betrieben werden können. Auch bei diesen handelt es sich beispielsweise um elektrische Widerstandsheizeinrichtungen, vorzugsweise in Form von Flächenheizern.

Wie Fig. 7 zeigt, sind diese Heizeinrichtungen 40, 41 stationär angeordnet, wie in der Prinzipskizze 7 dargestellt ist. Die beiden Kegelradpaare befinden sich in Fig. 7 in der Ruhestellung, sie greifen also nicht am Bandmaterial an, sondern werden aus dieser Ruhelage entsprechend den beiden Pfeilen in Fig. 7 herausgefahren und zum Spleißen über das Bandmaterial bewegt. Die beiden Heizeinrichtungen 40, 41 sind so positioniert, dass sie, wie durch die mit T gezeigten Pfeile dargestellt ist, die in die Ruheposition gefahrenen Kegelräder 35 bzw. 37 erwärmen. Nachdem die Kegelräder ebenfalls aus Metall sind, ist infolge der guten Wärmeleitung eine vollständige homogene Durchwärmung gewährleistet.

Anstelle von Widerstandsheizern können hier selbstverständlich ebenfalls entsprechende Heizstrahler oder Heizgebläse verwendet werden. Auch eine Temperaturmessung der Ist-Temperatur der Kegelräder wäre möglich, beispielsweise, indem die Kegelräder in der in Fig. 7 gezeigten Ruhestellung entsprechende Temperaturmesssensoren, die hier nicht näher gezeigt sind, kontaktieren. Wird festgestellt, dass die Ist-Temperatur die vorab eingestellte Soll-Temperatur unterschreitet, würden die Heizeinrichtungen 40, 41 über die Steuerungseinrichtung angesteuert, anderenfalls nicht.

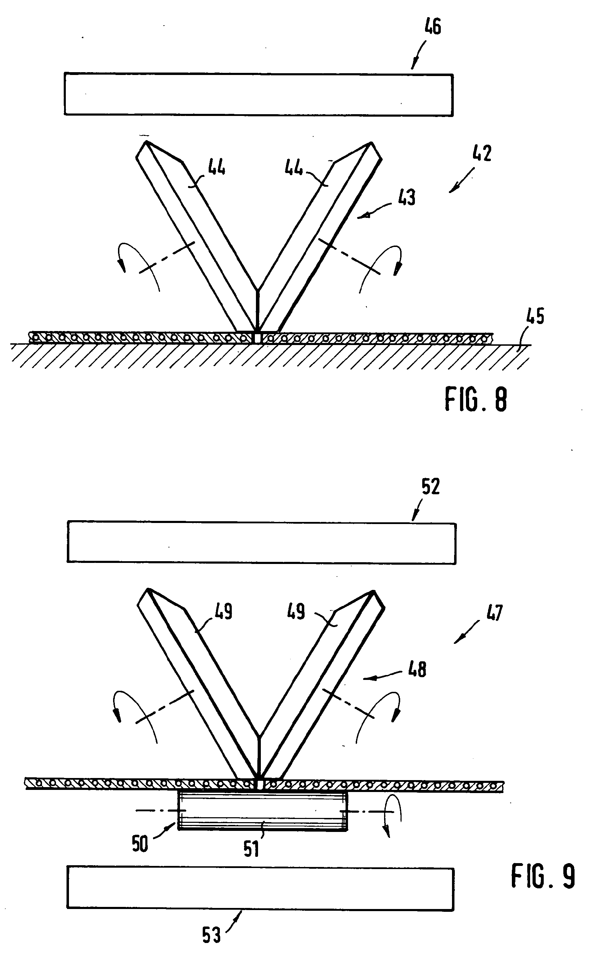

Fig. 8 zeigt eine weitere Spleißeinrichtung 42, bei der das Spleißwerkzeug ein Oberwerkzeug 43 in Form zweier Kegelräder 44 aufweist, die von der Funktion her den beiden Kegelrädern 35 aus Fig. 6 entsprechen. Das Unterwerkzeug 45 ist eine Bandunterlage, z. B. in Form eines Spleißtisches. Die Funktion ist im Prinzip die gleiche wie bezüglich Fig. 6 beschrieben. Auch hier ist eine Heizeinrichtung 46 vorgesehen, die die beiden Kegelräder 44, die - entsprechend der Kegelräder 35 aus Fig. 6 bzw. 7 - ebenfalls in eine seitliche Ruheposition bewegt werden, wenn der Spleißvorgang beendet ist, in eben dieser Ruheposition erwärmt.

Eine weitere Ausführungsform einer Spleißeinrichtung 47 zeigt Fig. 9. Das Oberwerkzeug 48 wird auch hier von zwei Kegelrädern 49 gebildet, das Unterwerkzeug 50 ist in Form einer Gegenlagerwalze 51 ausgebildet. Die Kegelräder 49 und die Gegenlagerwalze 51 werden synchron miteinander bewegt. Beiden ist jeweils eine Heizeinrichtung 52, 53 zugeordnet, die die Erwärmung derselben in der Ruheposition (oder Parkpositionen) entsprechend Fig. 7 vornimmt.

## Patentansprüche

1. Spleißeinrichtung zum Spleißen von un- oder vorvulkanisierten Bandabschnitten aus einem Gummimaterial, insbesondere von Textil- oder Stahlcordbändern, umfassend ein an den zu verspleißenden Bandabschnitten angreifendes Spleißwerkzeug, **dadurch gekennzeichnet, dass** wenigstens eine Heizeinrichtung (9, 10, 9a -9d, 10a - 10d, 20, 21, 31, 32, 40, 41, 46, 52, 53) zum Erwärmen zumindest eines Teils des Spleißwerkzeugs (2, 15, 23, 26, 34, 36, 43, 45, 48, 50) vorgesehen ist.

2. Spleißeinrichtung nach Anspruch 1, **dadurch gekennzeichnet, dass** das Spleißwerkzeug aus einem Oberwerkzeug (23, 34, 43, 48) und einem Unterwerkzeug (26, 36, 45, 50) besteht, zwischen denen die Bandabschnitte (7, 8, 29, 30, 38, 39) verspleißt werden, wobei eine Heizeinrichtung (9, 10, 9a -9d, 10a - 10d, 20, 21, 31, 32, 40, 41, 46, 52, 53) dem Oberwerkzeug (23, 34, 43, 48) oder dem Unterwerkzeug (26, 36, 45, 50) oder beiden zugeordnet ist.

3. Spleißeinrichtung nach Anspruch 1 oder 2, **dadurch gekennzeichnet, dass** das Spleißwerkzeug (2, 15, 23, 26, 34, 36, 43, 45, 48, 50), insbesondere das Ober- und/oder Unterwerkzeug, über die Heizeinrichtung (9, 10, 9a - 9d, 10a - 10d, 20, 21, 31, 32, 40, 41, 46, 52, 53) direkt oder indirekt erwärmbar ist

4. Spleißeinrichtung nach einem der vorangehenden Ansprüche, **dadurch gekennzeichnet, dass** eine Heizeinrichtung (9, 10, 9a -9d, 10a - 10d, 20, 21, 31, 32, 40, 41, 46, 52, 53) ein elektrischer Widerstandsheizer, ein Strahlungsheizer oder ein Heizgebläse ist.

5. Spleißeinrichtung nach Anspruch 4, **dadurch gekennzeichnet, dass** ein elektrischer Widerstandsheizer als am, im oder benachbart zum Spleißwerkzeug, insbesondere dem Ober- und/oder Unterwerkzeug angeordnetes Heizband, Heizpatrone oder Flächenheizer ausgebildet ist.

6. Spleißeinrichtung nach einem der Ansprüche 3 bis 5, **dadurch gekennzeichnet, dass** eine indirekt erwärmende Heizeinrichtung (20, 21, 40, 41, 46, 52, 53) derart positioniert ist, dass ein relativ zu den Bandabschnitten von einer Ruhe- in eine Spleißstellung bewegbarer Teil des Spleißwerkzeugs (15, 34, 36, 43, 45, 48, 50), insbesondere das Ober- und/oder Unterwerkzeug, in der vom Bandabschnitt entfernten Ruhestellung erwärmbar ist.

7. Spleißeinrichtung nach einem der vorangehenden Ansprüche, **dadurch gekennzeichnet, dass** bezogen auf die Breite des Spleißwerkzeugs (2, 15, 23, 26, 34, 36, 43, 45, 48, 50), insbesondere des Ober- und/oder Unterwerkzeugs, mehrere separat ansteuerbare Heizeinrichtungen (9, 10, 9a -9d, 10a - 10d, 20, 21, 31, 32, 40, 41, 46, 52, 53) neben- oder hintereinander angeordnet sind.

8. Spleißeinrichtung nach einem der vorangehenden Ansprüche, **dadurch gekennzeichnet, dass** die Heizleistung einer Heizeinrichtung (9, 10, 9a -9d, 10a - 10d, 20, 21, 31, 32, 40, 41, 46, 52, 53) über eine Steuerungseinrichtung (11) variierbar ist.

9. Spleißeinrichtung nach einem der vorangehenden Ansprüche, **dadurch gekennzeichnet, dass** ein oder mehrere dem Spleißwerkzeug (2, 15, 23, 26, 34, 36, 43, 45, 48, 50), insbesondere dem Ober- und/oder Unterwerkzeug, zugeordnete Temperatursensoren (12, 13) zum Erfassen der Werkzeugtemperatur zugeordnet sind, die mit einer den Betrieb einer Heizeinrichtung (9, 10, 9a -9d, 10a - 10d, 20, 21, 31, 32, 40, 41, 46, 52, 53) steuernden Steuerungseinrichtung (11) kommunizieren, die den Betrieb in Abhängigkeit des Sensorerfassungsergebnisses steuert.
